# EUROPÄISCHE PATENTSCHRIFT

(11) **EP 0 743 438 B1**
(45) Veröffentlichungstag und Bekanntmachung des Hinweises auf die Patenterteilung: **03.01.2001**
(21) Anmeldenummer: 96104451.8
(22) Anmeldetag: 20.03.1996
(51) Int. Cl.: F02D 35/00, F02D 41/34

(54) **Kraftstoffeinspritz-Verfahren für mehrzylindrige Brennkraftnaschinen**
Fuel injection method for multicylinder combustion engine
Procédé d'injection de carburant pour roteur à combustion à plusieurs cylindres

(30) Priorität: 15.05.1995 DE 19517749
(43) Veröffentlichungstag der Anmeldung: 20.11.1996
(73) Patentinhaber: SIEMENS AKTIENGESELLSCHAFT, 80333 München (DE)
(72) Erfinder: Bauer, Bernhard, 93057 Regensburg (DE)

(56) Entgegenhaltungen:
- EP-A- 0 638 717
- US-A- 4 941 449
- PATENT ABSTRACTS OF JAPAN vol. 17, no. 604 (M-1506), 8.November 1993 & JP-A-05 180062 (MITSUBISHI MOTOR CORP), 20.Juli 1993,

## Beschreibung

Die Erfindung betrifft ein Kraftstoffeinspritz-Verfahren für mehrzylindrige Brennkraftmaschinen gemäß dem Oberbegriff des Patentanspruchs 1.

Bei mehrzylindrigen Brennkraftmaschinen mit sequentieller Kraftstoffeinspritzung ist vom Motorstart bis zur Synchronisation nicht bekannt, in welchen Zylinder die nächste Kraftstoffeinspritzung zu erfolgen hat. Die Synchronisation erfolgt üblicherweise mittels einer Synchronmarke auf einer mit der Kurbelwelle der Brennkraftmaschine verbundenen Geberscheibe und einer mit der Nockenwelle verbundenen weiteren Geberscheibe, die bei Vierzylindermotoren in der Regel als Segmentscheibe mit einem Segment von 180° (high) und einer ebenso großen Lücke (low) ausgebildet ist. Beide Geberscheiben werden berührungslos von Sensoren abgetastet. Es ist zweckmäßig, die Geberscheiben so einzustellen, daß bei Motorbetrieb die Flankensignale (Übergang von low nach high oder umgekehrt) des Nockenwellensensors kurz nach den Synchronmarken-Signalen des Kurbelwellensensors erscheinen. Es sind auch Systeme mit nur einem Sensor bekannt.

Durch Auswertung der Sensorsignale ist nach Synchronisation (Vorbeilauf einer Synchronmarke oder Segmentflanke am zugeordneten Sensor) eindeutig feststellbar, bei welchem Zylinder die nächste Kraftstoffeinspritzung oder Zündung erfolgen soll. Durch weitere Inkrementmarken auf der Kurbelwellen-Geberscheibe ist die Ermittlung der aktuellen Winkellage der Kurbelwelle möglich.

In der nichtsynchronen Phase am Startbeginn kann eine sequentielle Kraftstoffeinspritzung in der festgelegten Zündreihenfolge, üblicherweise 1-3-4-2, noch nicht erfolgen. Diese Phase dauert bis zum Erscheinen der ersten Synchronmarke oder Segmentflanke, im ungünstigsten Fall eine ganze Kurbelwellenumdrehung. Um die Startzeit der Brennkraftmaschine so kurz wie möglich zu halten, erfolgt vorab eine Kraftstoffeinspritzung in dieser nichtsynchronen Phase, damit bereits der erste der nach der Synchronisierung erfolgenden Zündfunken ein zündfähiges Gemisch vorfindet.

Beispielsweise aus der EP 0 314 680 ist bekannt, daß diese Kraftstoffeinspritzung vor der Synchronisation als sog. "Bankeinspritzung" (gleichzeitig für alle Zylinder) bei Beginn der Kurbelwellendrehung - unabhängig von der Stellung der Nockenwelle oder von anderen Parametern - erfolgt. Dadurch wird das Startverhalten sehr beschleunigt.

Nachteilig an dieser vorab getätigten Bankeinspritzung ist, daß einige Zylinder nach erfolgter Synchronisation die Kraftstoffmenge aus der Vorabeinspritzung und zusätzlich eine Kraftstoffmenge aus der ersten sequentiellen Einspritzung nach der Synchronisation erhalten, während die restlichen Zylinder nur die Kraftstoffmenge aus der Vorabbeinspritzung erhalten. Die Folge ist über die einzelnen Zylinder unterschiedlich verteiltes Kraftstoff-Luft-Gemisch, was insbesondere bei niedrigen Motortemperaturen zum "Überfetten" der doppelt bedienten Zylinder führen kann.

Bei Betriebstemperaturen bis etwa 95°C bietet die Bank-Vorabeinspritzung hinsichtlich schnellerer Startzeiten gewisse Vorteile, bei Temperaturen etwa zwischen 0°C und +75°C kaum Nachteile. Bei sehr hohen Motortemperaturen > 95°C ist eine Bank-Vorabeinspritzung von Nachteil, da durch die Doppelbedienung von zwei Zylindern (beim Vierzylindermotor) sog. "Anlaßklopfen" auftreten kann. Anlaßklopfen kann aber auch bei hohen Ansauglufttemperaturen auftreten.

Aufgabe der Erfindung ist es, ein Kraftstoffeinspritz-Verfahren für Brennkraftmaschinen zu schaffen, welches in der Lage ist, in kritischen Bereichen vor erfolgter Synchronisation Mehrfach-Einspritzmengen und damit Überfetten des Kraftstoff-Luft-Gemischs sowie Anlaßklopfen zu vermeiden.

Bei der EP 0 638 717 A2 ergeben sich gewisse Zeit nach dem Start der Brennkraftmaschine mit den Bezugsmarken (des KW-Gebers) und den Pegelwechseln (des Phasengebers = Nockenwellengeber) die Marken M1 bis M4, wobei jeweils bei einer dieser Marken die erste Kraftstoff-Einspritzung beginnt (Seite 5, Zeilen 11 bis 15). Dabei muß in einem komplizierten Verfahren (Seite 5, Zeilen 16 bis 33) berechnet werden, in welche Zylinder diese Einspritzungen, je nach Startposition der Brennkraftmaschine (Seite 4, obere Hälfte), erfolgen sollen:

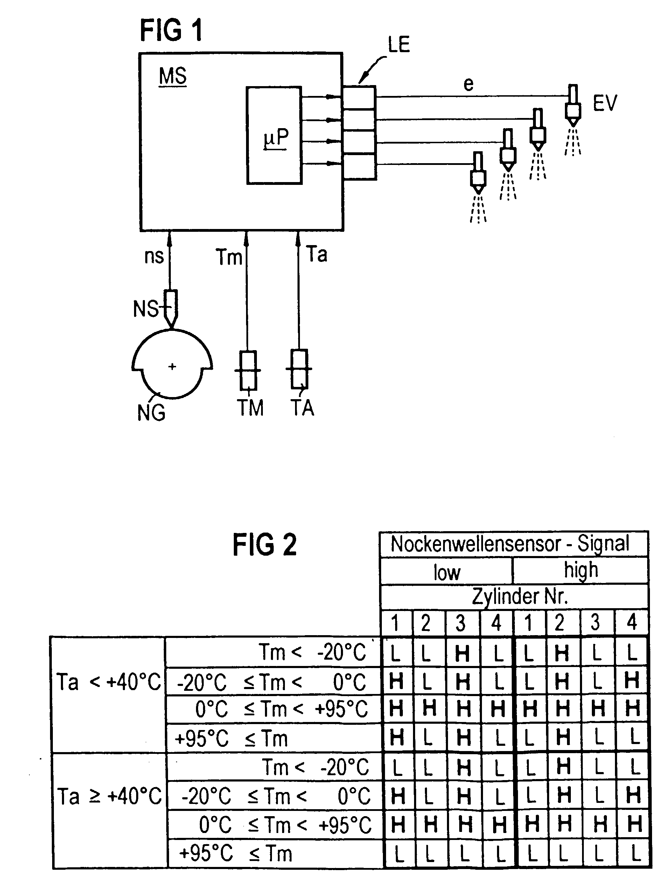

Figur2: Zylinder D+E; Figur 3: A+E; Figur 4: A+B; Figur 5: D+E.

Bei der EP 0 638 717 A2 ist also sowohl der Nockenwellengeber als auch der Kurbelwellengeber und ein aufwendiger Rechenvorgang für die Berechnung der ersten Einspritzimpulse erforderlich. Gleiches gilt für die in JP-A-5180062 beschriebene Einrichtung.

Bei der Erfindung hingegen erfolgt die erste Kraftstoff-Einspritzung im Augenblick des Startbeginns - entsprechend dem Zeitpunkt t2 nach Figur 2 der Entgegenhaltung - ohne Rechnung, entsprechend gespeicherter Daten, abhängig nur von der Stellung (low oder high) des Nockenwellengebers und der Motortemperatur. Das ist ein wesentlich einfacheres Verfahren als jenes, welches die Entgegenhaltung lehrt.

Die oben genannten Aufgaben werden erfindungsgemäß durch die Merkmale des Patentanspruchs 1 gelöst.

Eine vorteilhafte Ausgestaltung der Erfindung ist dem Unteranspruch zu entnehmen.

Ein Ausführungsbeispiel der Erfindung ist im folgenden unter Bezugnahme auf die schematische Zeichnung näher erläutert. Es zeigen:
- Figur 1:: die schematische Darstellung einer Kraftstoffeinspritzanlage einer Brennkraftmaschine, und
- Figur 2:: eine Tabelle der Zylinder, in welche eine Kraftstoff-Vorabeinspritzung erfolgt.

Figur 1 zeigt die schematische Darstellung einer sequentiellen Kraftstoffeinspritzanlage einer Vierzylinder-Brennkraftmaschine. Die Ansteuersignale e für die vier Einspritzventile EV werden in einem Mikroprozessor µP eines Motorsteuergerätes MS in üblicher Weise aus Signalen von Sensoren erzeugt, welche mit Ausnahme eines Nockenwellensensors NS, eines Kühlmittel-Temperatursensors TM und ggf. eines Ansaugluft-Temperatursensors TA, die für die Durchführung des erfindungsgemäßen Verfahrens bei dem Ausführungsbeispiel erforderlich sind, nicht dargestellt sind. Diese Ansteuersignale e werden, über Leistungsendstufen LE verstärkt, den Einspritzventilen EV zugeführt.

Die Ansteuersignale e für die vier Einspritzventile EV sind in diesem Ausführungsbeispiel in Abhängigkeit der Parameter
Ausgangssignal ns des Nockenwellensensors NS,
Kühlwassertemperatur Tm (vier Bereiche), und
Ansauglufttemperatur Ta (zwei Bereiche)
bei Motoren mit bis zu vier Zylindern in einem acht Bytes umfassenden, in Figur 1 nicht dargestellten Speicherbereich des Mikroprozessors µP nichtflüchtig gespeichert, wie der Tabelle in Figur 2 zu entnehmen ist. Für Motoren mit bis zu acht Zylindern wären dafür 16 Bytes erforderlich. Bei einer vereinfachten Ausführung ohne Berücksichtigung der Ansauglufttemperatur würden vier Bytes (bzw. 8 Bytes bei einer Brennkraftmaschine mit maximal 8 Zylindern) genügen.

Jedes Byte umfaßt 8 bit, von denen jeweils 4 bit den vier Zylindern der Brennkraftmaschine zum einen bei Nockenwellensensorsignal ns = high und zum anderen bei Nockenwellensensorsignal ns = low zugeordnet sind.

Beim Start der Brennkraftmaschine wird das den momentan gültigen Parametern ns, Tm und Ta zugeordnete Byte ausgewählt und in die in diesem Byte angegebenen Zylinder eine bestimmte Kraftstoffmenge vorab eingespritzt; beispielsweise bei Ta = +20°C, Tm = -5°C und ns = low in die Zylinder Nr. 1 und 3 (bei ns = high hingegen in die Zylinder 2+4).

In diesem Ausführungsbeispiel ist vorgesehen, daß bei Temperaturen Tm < -20°C eine Vorabeinspritzung in nur einen Zylinder, bei -20°C ≤ Tm < 0°C in zwei Zylinder, bei 0°C ≤ Tm < +95°C in alle Zylinder (bekannte Bankeinspritzung) und bei Tm ≥ +95°C je nach Ansauglufttemperatur in zwei (bei Ta < +40°C) oder in keinen Zylinder (bei Ta ≥ +40°C) erfolgt. Für andere Brennkraftmaschinen können eine andere Auswahl der Zylinder sowie mehr oder weniger Temperaturbereiche vorgesehen sein, um die gestellte Aufgabe zu erfüllen.

Wenn eine Vorabeinspritzung in zwei Zylinder erfolgt, gemäß Figur 2 entweder in die Zylinder Nr. 1+3 oder 2+4, so ist dies nicht mit der bekannten Gruppeneinspritzung zu verwechseln, die beim Vierzylindermotor bei der angegebenen Zündreihenfolge die Zylinder mit gleicher Bewegungsrichtung, also die Zylinder 1+4 oder 2+3 umfaßt.

Durch das beschriebene Verfahren wird sowohl Überfetten des Gemischs bei niedrigen Motortemperaturen als auch Anlaßklopfen bei hohen Ansaugtemperaturen vermieden, ohne auf die Vorteile eines beschleunigten Starts durch die bekannte Bankeinspritzung bei Motorbetriebstemperatur verzichten zu müssen.

## Patentansprüche

1. Kraftstoffeinspritz-Verfahren für mehrzylindrige Brennkraftmaschinen, mittels der in einem Motorsteuergerät (MS) gebildeten Ausgangssignale wenigstens eines Nockenwellensensors (NS),
**dadurch gekennzeichnet,**
daß in einem Speicherbereich des Motorsteuergeräts (MS) die Nummern (1 bis 4) derjenigen Zylinder abgelegt sind, in welche in Abhängigkeit von Motor- oder Kühlmitteltemperatur (Tm) und Ausgangssignal (ns = high, low) des Nockenwellensensors (NS) bei Startbeginn der Brennkraftmaschine eine Kraftstoff-Vorabeinspritzung erfolgen soll.

2. Kraftstoffeinspritz-Verfahren nach Anspruch 1,
**dadurch gekennzeichnet,**
daß die Zylindernummern zusätzlich in Abhängigkeit von der Ansauglufttemperatur (Ta) der Brennkraftmaschine im Speicherbereich abgelegt sind.

## Claims

1. Fuel injection method for multicylinder internal combustion engines, by means of the output signals of at least one camshaft sensor (NS) formed in an engine control unit (MS),
characterised in that
the numbers (1 to 4) of those cylinders into which initial fuel injection is to take place in dependency on the engine or coolant temperature (Tm) and output signal (ns = high, low) of the camshaft sensor (NS) when the internal combustion engine is started, are stored in a memory area of the engine controller (MS).

2. Fuel injection method in accordance with claim 1, characterised in that the cylinder numbers are additionally stored in the memory area in dependency on the intake air temperature (Ta) of the internal combustion engine.

## Revendications

1. Procédé d'injection de carburant pour moteurs à combustion interne à plusieurs cylindres, utilisant les signaux de sortie d'au moins un capteur d'arbre à cames (NS), qui sont formés dans un appareil (MS) de commande du moteur,
caractérisé en ce que
dans une zone de mémoire de l'appareil (MS) de commande du moteur, sont mémorisés les numéros (1 à 4) des cylindres dans lesquels il doit se produire une injection anticipée de carburant au début du démarrage du moteur à combustion interne, en fonction de la température du moteur et du fluide de refroidissement (Tm) et du signal de sortie (ns = haut, bas) du capteur d'arbre à cames (NS).

2. Procédé d'injection de carburant selon la revendication 1,
caractérisé en ce que
les numéros des cylindres sont en outre mémorisés dans la zone de mémoire en fonction de la température de l'air d'admission (Ta) du moteur à combustion interne.
